# EUROPÄISCHE PATENTSCHRIFT

(11) **EP 3 898 737 B1**
(45) Veröffentlichungstag und Bekanntmachung des Hinweises auf die Patenterteilung: **08.05.2024**
(21) Anmeldenummer: 19828682.5
(22) Anmeldetag: 17.12.2019
(51) Int. Cl.: C08G 18/08, C08G 18/44, C08G 18/42, C08G 18/70, C08G 18/79, C09D 153/02, C08G 18/73, C09D 5/24, B05D 7/00, B05D 7/02, C09D 5/02, C09D 7/40, C09D 109/06, C09D 5/00

(54) **WÄSSRIGE PRIMERBESCHICHTUNG**
AQUEOUS PRIMER COATING
COUCHE D'AMORCE AQUEUSE

(30) Priorität: 18.12.2018 EP 18213389
(43) Veröffentlichungstag der Anmeldung: 27.10.2021
(73) Patentinhaber: Covestro Deutschland AG, 51373 Leverkusen (DE)
(72) Erfinder: MICHAELIS, Thomas, 51375 Leverkusen (DE); POHL, Torsten, 51377 Leverkusen (DE); SIEGEMUND, Sven, 51399 Burscheid (DE); WEIKARD, Jan, 51375 Leverkusen (DE)
(74) Vertreter: Levpat
(86) Internationale Anmeldenummer: PCT/EP2019/085640
(87) Internationale Veröffentlichungsnummer: WO 2020/127258

(56) Entgegenhaltungen:
- EP-B1- 1 226 218
- DE-A1- 19 609 311
- DATABASE WPI Week 200833 Thomson Scientific, London, GB; AN 2008-E77610 XP002791319, & JP 2008 056772 A (SEIKO KASEI KK) 13. März 2008 (2008-03-13)

## Beschreibung

Die vorliegende Erfindung betrifft neuartige Beschichtungen, die aus wässriger Phase auf Untergründe wie Kunststoffe appliziert und mit weiteren Beschichtungen überschichtet werden. Diese Beschichtungen zeichnen sich durch besonders gute Haftfestigkeiten insbesondere auf Kunststoffen aus und sind dabei besonders wirtschaftlich.

Werden Anforderungen wie gute Haftfestigkeit beispielsweise auch nach Bewitterung an Lacke auf Kunststoffteilen gestellt wie im Automobilbau, so werden die Kunststoffteile meist mit einer Grundierung, auch Primer genannt, beschichtet, bevor die farb- und effektgebende Decklackschicht oder -schichten appliziert werden. Neben der Haftfestigkeit soll die Grundierung auch zum Steinschlagschutz beitragen. Weiterhin kann eine Grundierung durch Zusatz von entsprechenden Additiven wie Leitrußen leitfähig ausgestaltet werden, so dass die anschließend applizierten Schichten mittels elektrostatischer Spritzapplikation und damit mit besonders hoher Transfereffizienz aufgebracht werden können.

Zur Vermeidung von Lösemittelemissionen werden heute auch wässrige Primer angeboten, die zumeist auf Polyurethandispersionen (PUD) als Bindemittel basieren. Hydrolysestabile PUDs sind vergleichsweise hochpreisige Bindemittel, so dass ein Bedarf für ein kostengünstigeres Bindemittelsystem bestand, welches das Anforderungsprofil für eine Grundierung von Kunststoffteilen erfüllt. EP-B 1226218 beschreibt Hydroprimer-Formulierungen auf Basis von Polyurethandispersionen wie sie zur Zeit für die Lackierung von Automobilanbauteilen in gro-ßem Maßstab eingesetzt werden.

Das technische Datenblatt der Fa. Synthomer Deutschland GmbH zu Litex^{®} N 7100 (Technical Data Sheet, Revision: 4, 10/30/2014) beschreibt für ein Styrol-Polybutadien-Copolymer-Latex die mögliche Mischung mit Polyurethanen: "Litex N 7100 is used for leather finishing formulations. The latex is compatible with the common additives used for leather finishing including crosslinking agents like zink oxyde. Blending of Litex N 7100 with all-acrylics or Polyurethans is also possible."

In den Patentanmeldungen US2013186546, EP2181826, DE19609311, EP0167189, US3922470 werden explizit und/oder generisch Zusammensetzungen offenbart, enthaltend wässrige Polyurethandispersionen (PUD) oder Styrol-Polybutadien-Copolymer-Dispersionen (SBR), die in der Leder- und Textilindustrie Anwendung finden.

JP 2008 056772A offenbart ein wässriges Beschichtungsmittel für Ethylen-Propylen-Gummi.

Eine Verwendung für die Kunststofflackierung, beispielsweise im Bereich wässriger Primer zur Lackierung von Thermoplasten aus einem Spritzgussprozess und insbesondere in Abmischungen mit Polyurethandispersionen wird nicht erwähnt.

Eine Aufgabe der Erfindung war es mindestens einen Nachteil des Standes der Technik zumindest zu einem Teil zu minimieren. Weiterhin war eine Aufgabe der Erfindung, eine kostengünstige und einfache Möglichkeit aufzuzeigen einen Primer mit den positiven Eigenschaften eines Polyurethandispersion zur Lackierung von Thermoplasten bereitzustellen. Mindestens eine dieser Aufgaben konnte im Rahmen der vorliegenden Erfindung durch eine Zusammensetzung enthaltend eine wässrige Polyurethandispersion (PUD) gelöst werden, die eine gewisse Menge an Styrol-Polybutadien-Copolymer-Dispersion (SBR) enthält.

Ein erster Gegenstand der Erfindung gemäß Anspruch 1 betrifft daher eine Zusammensetzung zur Beschichtung von Substraten, insbesondere zur Beschichtung von thermoplastischen Substraten, enthaltend mindestens eine gegebenenfalls hydroxyfunktionelle, anionische oder nichtionische Polyurethandispersion (PUD) und mindestens eine anionische Styrol-Polybutadien-Copolymer-Dispersion (SBR), wobei die Zusammensetzung die mindestens eine Polyurethandispersion in einem Bereich von 33 bis 90 Gew.-%, bezogen auf den nicht flüchtigen Anteil der Zusammensetzung beinhaltet, bestimmt nach Verdampfen der Lösungsmittel bzw. Dispergiermittel und Behandlung der Zusammensetzung von 1 g für 1 h bei 125 °C nach DIN EN ISO 32511.

In einer bevorzugten Ausgestaltung der Zusammensetzung liegt das Gewichtsverhältnis der PUD zu der SBR in der Zusammensetzung in einem Bereich von 10:1 bis 1:3, bevorzugt in einem Bereich von 9:1 bis 1:2, bezogen auf den nicht flüchtigen Anteil der Zusammensetzung. Der nicht flüchtige Anteil wird bestimmt nach Verdampfen der Lösungsmittel bzw. Dispergiermittel und Behandlung der Zusammensetzung von 1 g für 1 h bei 125 °C nach DIN EN ISO 32511.

In einer bevorzugten Ausgestaltung der Zusammensetzung beinhaltet die Zusammensetzung die PUD zu einem Anteile von 45 bis 85 Gew.-%, besonders bevorzugt von 60 bis 80 Gew.-%, bezogen auf den nicht flüchtigen Anteil der Zusammensetzung.

In einer bevorzugten Ausgestaltung der Zusammensetzung beinhaltet die Zusammensetzung die SBR zu einem Anteil von 10 bis 67 Gew.-%, bevorzugt von 15 bis 55 Gew.-%, besonders bevorzugt von 20 bis 40 Gew.-%, bezogen auf den nicht flüchtigen Anteil der Zusammensetzung.

Bevorzugt weist die Zusammensetzung einen Feststoffgehalt in einem Bereich von 20 bis 60 Gew.-%, bevorzugt von 30 bis 55 Gew.-%, bezogen auf die Gesamtmasse der Zusammensetzung auf. Der Feststoffgehalt sowie auch der zuvor genannte nicht flüchtige Anteil der Zusammensetzung ist der Anteil der Zusammensetzung, der nach Verdampfen der Lösungsmittel bzw. Dispergiermittel und Behandlung der Zusammensetzung von 1 g für 1 h bei 125 °C nach DIN EN ISO 32511 erhalten wird.

In einer bevorzugten Ausführungsform der Zusammensetzung zur Beschichtung enthält die Zusammensetzung mindestens eine reaktive Vernetzerkomponente, insbesondere ein Polyisocyanat. Bevorzugt beinhaltet die Zusammensetzung zur Beschichtung die reaktive Vernetzerkomponente in einem Bereich von 0,01 bis 5 Gew.-%, weiter bevorzugt von 0,1 bis 4 Gew.-%, besonders bevorzugt von 0,3 bis 3 Gew.-%, bezogen auf die Gesamtmasse der Zusammensetzung.

Im Rahmen der vorliegenden Erfindung werden unter hydroxyfunktionellen, anionischen und/oder nichtionischen Polyurethandispersionen (PUD) die folgenden Dispersionen verstanden: Kommerziell erhältliche PUD sind beispielsweise Produkte der Covestro AG, Leverkusen, DE, die unter den Handelsnamen Bayhydrol^{®} UH, U und UA, Impranil^{®}, Baybond^{®} und Dispercoll^{®} U vertrieben werden, Produkte der Alberdingk-Boley GmbH, Krefeld, DE, die unter dem Handelsnamen Alberdingk^{®} U vertrieben werden, Produkte der DSM Neo-Resins, Zwolle, NL, die unter dem Handelsnamen NeoCryl^{®} R vertrieben werden, Produkte der Allnex bv, Drogenbos, BE, die unter dem Handelsnamen Daotan^{®} vertrieben werden, Produkte der Lubrizol Ltd, UK, die unter dem Handelsnamen Sancure^{®} vertrieben werden, Produkte der Wanhua Chemical Group Ltd. CN, die unter dem Handelsnamen Lacper^{®} PUD oder PUA vertrieben werden.

Diese und andere wässrige Polyurethandispersionen enthalten mindestens ein Polymer ausgewählt aus der Gruppe bestehend aus mindestens einem Polyurethanen oder mindestens einem Polyurethanpolyharnstoff oder Mischungen aus mindestens zwei hiervon. Im Folgenden wird für das Polymer enthalten in der Polyurethandispersion nicht zwischen Polyurethan und Polyurethanpolyharnstoff unterschieden sondern lediglich der Begriff Polyurethan verwenden, wobei das Polyurethan auch ein Polyurethanpolyharnstoff sein kann. Um die Polymere in Wasser stabil dispergiert zu erhalten, werden üblicherweise interne, d.h. chemisch an die Polymere gebundene oder externe Emulgatoren oder Mischungen interner und externer Emulgatoren verwendet. Bevorzugt werden interne Emulgatoren zur Stabilisierung verwendet. Bevorzugt sind die internen Emulgatoren nicht-ionische, anionische oder kationische Gruppen. Bevorzugt sind anionische und nichtionische Emulgatoren sowie Mischungen dieser beiden Emulgatoren. Besonders bevorzugt sind Polymere, die nur mit internen anionischen Emulgatoren hydrophiliert werden.

Zur Herstellung der PUD können sämtliche, aus dem Stand der Technik bekannte Verfahren wie Emulgator-Scherkraft, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt ist das Schmelz-Emulgier- und das Aceton-Verfahren. Besonders bevorzugt ist das Aceton-Verfahren.

Das mindestens eine Polyurethan, das in der Polyurethandispersion PUD enthalten ist, ist erhältlich aus der Umsetzung mindestens der Komponenten:
(A) wenigstens einer Polyolkomponente,
(B) wenigstens einer Polyisocyanatkomponente,
(C) wenigstens einer, mindestens eine hydrophilierende Gruppe aufweisende, Hydrophilierungs-Komponente,
(D) gegebenenfalls mono-, di-, und/oder tri-aminofunktionelle und/oder hydroxyaminofunktionelle Verbindungen, und
(E) gegebenenfalls sonstige isocyanatreaktive Verbindungen.

Geeignete Polyolkomponenten (A) sind Verbindungen mit mindestens zwei gegenüber Isocyanaten reaktionsfähigen Wasserstoffatomen. Bevorzugt weist die Polyolkomponente (A) ein zahlenmittleres s Molekulargewicht Mn in einem Bereich von 62 bis 18000 g/mol, besonders bevorzugt von 62 bis 4000 g/mol auf.

In einer bevorzugten Ausgestaltung der Zusammensetzung ist die Polyolkomponente (A) ausgewählt aus der Gruppe bestehend aus einem Polyetherpolyol, einem Polyesterpolyol, einem Polycarbonatepolyol, einem Polylactonepolyol und einem Polyamidpolyol oder Mischungen aus mindestens zwei hiervon. Bevorzugte Polyole (A) weisen bevorzugt 2 bis 4, besonders bevorzugt 2 bis 3 Hydroxylgruppen, ganz besonders bevorzugt 2 Hydroxylgruppen auf. Auch Gemische verschiedener derartiger Verbindungen kommen in Frage.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, wie z.B. Bernstein-, Methylbernstein-, Glutar-, Adi pin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder Mischungen von mindestens einem hiervon mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder Mischungen von mindestens zwei hiervon zur Herstellung der Polyester verwendet werden.

Selbstverständlich kann es sich bei den Polyesterpolyolen auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Auch Hydroxylgruppen aufweisende Polycarbonate kommen als Polyolkomponenten (A) in Betracht, z.B. solche, die durch Umsetzung von Diolen wie 1,4-Butandiol und/oder 1,6-Hexandiol mit Diarylcarbonaten, wie Diphenylcarbonat, Dialkylcarbonaten, wie Dimethylcarbonat oder Phosgen sowie Mischungen von mindestens zwei hiervon hergestellt werden können. Durch die zumindest teilweise Verwendung von Hydroxylgruppen aufweisenden Polycarbonaten kann die Hydrolysebeständigkeit der Polyurethan- -Dispersionen verbessert werden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten (A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pentaerythrit oder Zucker oder an Wasser zugänglich sind.

Ebenfalls geeignete Komponenten (A) sind niedermolekulare Diole, Triole und/oder Tetraole wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexan-dimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyolkomponente (A) können auch Umsetzungsprodukte der genannten Polyole, insbesondere der niedermolekularen Polyole, mit Ethylen- und/oder Propylenoxid eingesetzt werden.

Die niedermolekularen Komponenten (A) haben bevorzugt ein zahlenmittleres Molekulargewicht Mn von 62 bis 400 g/ mol und werden bevorzugt in Kombination mit den oben beschriebenen Polyesterpolyolen, Polylactonen, Polyethern und/oder Polycarbonaten eingesetzt.

Die Polyolkomponente (A) ist in dem Polyurethan der PUD bevorzugt in einem Bereich von 20 bis 95 Gew.-%, besonders bevorzugt von 30 bis 90 Gew.-% und ganz besonders bevorzugt von 65 bis 90 Gew.-%, bezogen auf die Gesamtmasse der Polyurethans Zusammensetzung enthalten.

Als Komponenten (B) sind beliebige organische Verbindungen geeignet, die mindestens zwei freie Isocyanatgruppen pro Molekül aufweisen. Bevorzugt weist die Polyisocyanatkomponente freie und/oder blockierte Isocyanatgruppen in einem Bereich von 2 bis 6, bevorzugt von 2 bis 4, besonders bevorzugt von 2 bis 3 auf.

Bevorzugt werden als Polyisocyanat-Komponente (B) Diisocyanate Y(NCO)2 eingesetzt, wobei Y ausgewählt ist aus der Gruppe bestehend aus einem zweiwertigen aliphatischen Kohlenwasserstoffrest mit 4 bis 12 Kohlenstoffatomen, einem zweiwertigen cycloaliphatischen Kohlenwasserstoffrest mit 6 bis 15 Kohlenstoff-Atomen, einem zweiwertigen aromatischen Kohlenwasserstoffrest mit 6 bis 15 Kohlenstoff-Atomen, einem zweiwertigen araliphatischen Kohlenwasserstoffrest mit 7 bis 15 Kohlenstoffatomen oder einer Mischung aus mindestens zwei hiervon.

In einer bevorzugten Ausgestaltung der Zusammensetzung ist das Polyisocyanat (B) ausgewählt aus der Gruppe bestehend aus Tetramethylendiisocyanat, Pentamethylendiisocyanat, Hexamethylendiisocyanat, Dodecamethylendiisocyanat, 1,4-Diisocyanatocyclohexan, 1-Iso-cyanato-3,3,5-trimethyl-5-isocyanatomethyl-cyclohexan (= IPDI, Isophorondiisocyanat), 4,4'-Diisocyanato-dicyclohexyl-methan, 4,4'-Diisocyanatodicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus mindestens zwei dieser Verbindungen bestehende Gemische.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Polyisocyanate (B) sind Hexamethylendiisocyanat (=HDI), Pentamethylendiisocyanat, 1,4-Diisocyanato-cyclohexan, 1-Isocyanato-3,3,5-trimethyl-5-isocyanatomethyl-cyclohexan (= IPDI), 4,4'-Diisocyanato-dicyclohexyl-methan, 2,4-Diisocyanatotoluol, 2,6-Diisocyanatotoluol, 4,4'-Diisocyanato-diphenylmethan, 2,2'- und 2,4'-Diisocyanatodiphenylmethan, sowie aus mindestens zwei dieser Verbindungen bestehende Gemische.

Besonders bevorzugte Komponenten (B) sind Hexamethylendiisocyanat und 1-Isocyanato-3,3,5 -trimethyl-5 -isocyanatomethyl-cyclohexan.

Komponente (B) ist in dem erfindungsgemäßen Polyurethan der PUD in Mengen in einem Bereich von 5 bis 60 Gew.-%, bevorzugt von 6 bis 45 Gew.-% und besonders bevorzugt von 7 bis 25 Gew.-% enthalten.

In einer bevorzugten Ausgestaltung der Zusammensetzung ist die hydrophilierende Gruppe der Hydrophilierungs-Komponente (C) ausgewählt aus der Gruppe bestehend aus einer Sulphonatgruppe, einer Carboxylatgruppen oder einer Kombination aus mindestens zwei hieraus. Geeignete Komponenten (C) sind beispielsweise Sulphonat- oder Carboxylatgruppen enthaltende Komponenten wie z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.- Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 mol Diamin wie z.B. 1,2-Ethandiamin oder Isophorondiamin mit 2 mol Acrylsäure oder Maleinsäure sowie Gemische aus mindestens zwei hiervon.

Die Säuren werden häufig direkt in Ihrer Salzform als Sulphonat bzw. Carboxylat eingesetzt. Es ist jedoch auch möglich, die zur Salzbildung notwendigen Neutralisationsmittel anteilig oder ganz erst während oder nach der Herstellung der Polyurethane zuzugeben.

Für die Salzbildung besonders gut geeignete und bevorzugte tertiäre Amine sind z.B. Triethylamin, Dimethylcyclohexylamin, Ethyldiisopropylamin. Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich andere Neutralisationsmittel wie z.B. Natrium-, Kalium-, Lithium, Calcium-Hydroxid für Neutralisationszwecke einzusetzen.

Weitere geeignete Komponenten (C) sind nichtionisch hydrophilierend wirkende, mono- oder difunktionelle Polyether auf Basis von auf Alkoholen oder Aminen gestarteten Ethylenoxid-Polymeren oder Ethylenoxid/Propylenoxid-Copolymeren, wie Polyether LB 25 (Covestro AG; Deutschland) oder MPEG 750: Methoxypolyethylenglykol, Molekulargewicht 750 g/mol (z.B. Pluriol^{®} 750, BASF AG, Deutschland).

Bevorzugte Komponenten (C) sind N-(2-Aminoethyl)-2-aminoethansulfonat und die Salze der Dimethylolpropionsäure und der Dimethylolbuttersäure.

Komponente (C) ist in dem Polyurethan, enthalten in der PUD bevorzugt in einem Bereich von 0,1 bis 15 Gew.-%, besonders bevorzugt von 0,5 bis 10 Gew.-%, ganz besonders bevorzugt von 0,8 bis 5 Gew.-% und noch weiter bevorzugt von 0,9 bis 3,0 Gew.-%, bezogen auf die Gesamtmasse des Polyurethans enthalten.

In einer bevorzugten Ausgestaltung der Zusammensetzung ist die mono-, di-, und/oder tri-aminofunktionelle und/oder hydroxyaminofunktionelle Verbindungen (D) ausgewählt aus der Gruppe bestehend aus mono-, di-, trifunktionellen Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylen di amin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-amino methyl-cyclohexan (Isophorondiamin), Piperazin, 1,4-Diaminocyclohexan, Bis-(4-amino cyclohexyl)-methan und Diethylentriamin. Weiterhin kommen Adipinsäuredihydrazid, Hydrazin bzw. Hydrazinhydrat in Frage. Selbstverständlich können auch Mischungen mehrerer der genannten, ggf. auch zusammen mit nicht genannten Verbindungen (D) eingesetzt werden.

Bevorzugte Komponenten (D) sind 1,2-Ethandiamin, 1-Amino-3,3,5-trimethyl-5-amino-methyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten (D) dienen als Kettenverlängerungsmittel bevorzugt dazu, höhere Molekulargewichte aufzubauen oder als monofunktionelle Verbindungen Molekulargewichte zu begrenzen und/oder ggf. zusätzlich weitere reaktive Gruppen, wie z.B. freie Hydroxylgruppen als weitere Vernetzungsstellen in das Polyurethan einzubauen.

Komponente (D) ist in dem Polyurethan in einem Bereich von bevorzugt 0 bis 10 Gew.-%, besonders bevorzugt von 0 bis 5 Gew.-% und ganz besonders bevorzugt von 0,2 bis 3 Gew.-% enthalten, bezogen auf die Gesamtmasse des Polyurethan.

Die gegebenenfalls mit zu verwendende mindestens eine sonstige isocyanatreaktive Verbindung (E) ist bevorzugt ein aliphatischer, cycloaliphatischer oder aromatischer Monoalkohol mit 2 bis 22 C-Atomen. In einer bevorzugten Ausgestaltung der Zusammensetzung ist die mindestens eine sonstige isocyanatreaktive Verbindung (E) ausgewählt aus der Gruppe bestehend aus Ethanol, Butanol, Hexanol, Cyclohexanol, Isobutanol, Benzylalkohol, Stearylalkohol, 2-Ethylethanol, Cyclohexanol; ungesättigte, für Polymerisationsreaktionen zugängliche Gruppen enthaltende Verbindungen wie z.B. Hydroxyethylacrylat, Hydroxyethylmethacrylat, Hydroxybutylacrylat, Hydroxybutylmethacrylat, Hydroxypropylacrylat, Hydroxypropylmethacrylat, Pentaerythrittrisacylat, hydroxyfunktionelle Umsetzungsprodukte aus Monoepoxiden, Bisepoxiden und/oder Polyepoxiden mit Acrylsäure oder Methacrylsäure oder Mischungen aus mindestens zwei hiervon.

Die Komponente (E) ist bevorzugt in dem Polyurethan in einem Bereich von 0 bis 20, ganz bevorzugt von 0 bis 10 Gew.-%, bezogen auf die Gesamtmasse des Polyurethan, enthalten.

Die vorgenannten PUDs können auch durch Zusatz von radikalisch polymerisierbaren Vinylmonomeren und deren Propfpolymerisaten im Sinne einer Emulsionspolymerisation durch Zugabe an sich bekannter Polymerisationsinitiatoren modifiziert werden. Sind als Komponente (E) Vinylmonomere mit in die PUD eingebaut worden, so werden diese bevorzugt bei der Emulsationspolymerisation als Pfropfgrundlage mit reagieren.

In einer bevorzugten Ausgestaltung der Zusammensetzung zur Beschichtung werden als Polyurethandispersionen solche eingesetzt, die als Aufbaukomponenten (A) entweder aromatische Polyesterkomponenten und dabei insbesondere Polyesterdiol-Komponenten enthalten, die als Säurekomponenten Phthalsäure, Isophthalsäure, Terephthalsäure oder deren Mischungen zumindest anteilig enthalten, weiterhin sind bevorzugt solche Polyurethandispersionen, die Polycarbonatdiole als Aufbaukomponenten (A) enthalten, sowie Polyurethandispersionen, die als Aufbaukomponente (A) Mischungen von aromatischen Polyesterdiolen mit Polycarbonatdiolen enthalten. Weiterhin bevorzugt sind Mischungen von Polyurethandispersionen, die als Aufbaukomponenten (A) aromatische Polyesterkomponenten und dabei insbesondere Polyesterdiol-Komponenten enthalten, die als Säurekomponenten Phthalsäure, Isophthalsäure, Terephthalsäure oder deren Mischungen zumindest anteilig enthalten mit solchen Polyurethandispersionen, die Polycarbonatdiole als Aufbaukomponenten (A) enthalten.

Beispiele für anionische Styrol-Polybutadien-Copolymer-Dispersionen sind: Kommerziell erhältliche Produkte sind beispielsweise SBR, die von BASF SE, Ludwigshafen, DE unter dem Handelsnamen Styrofan^{®} und Styronal^{®} vertrieben werden, die von AsahiKasei Chemicals, Tokyo, Jp unter der Bezeichnung SB Latex vertrieben werden, die von Arlanxeo Deutschland GmbH, Dormagen, DE unter dem Handelsnamen Takene^{®} Latex vertrieben werden, die von Synthomer Deutschland GmbH unter dem Handelsnamen Litex^{®} vertrieben werden und die von Zeon Corporation, Tokyo, Jp unter dem Handelsnamen Nipol^{®} vertrieben werden.

SBRs sind im wesentlichen Polystyroldispersionen, die durch Zusatz von Polybutadien verändert, insbesondere weichgemacht werden. Sie haben eher elastomere als thermoplastische Eigenschaften. Durch Zusatz von externen Emulgatoren oder Copolymerisation von Säuregruppen-tragenden Vinylmonomeren wie Acryl- oder Methacrylsäure werden die Polymere in Wasser stabilisiert. Die jeweiligen Anteile von Polystyrol und Polybutadien beeinflussen die Glasübergangstemperatur des Polymers. Bei hohem Polystyrolanteil liegt die Glasübergangstemperatur oberhalb von 23 °C bis zu der von reinem Polystyrol, bei hohen Anteilen von Polybutadien liegt die Glasübergangstemperatur unter 23 °C und kann bis -30 °C und darunter betragen.

Bervorzugt für die erfindungsgemäße Zusammensetzung zur Beschichtung werden als Styrol-Polybutadien-Copolymer-Dispersionen solche SBR eingesetzt, die durch Carboxylatgruppen stabilisert werden. , Besonders bevorzugt sind dabei solche Carboxylat-stabilisierten SBR, die eine Glasübergangstemperatur zwischen -30 °C und + 50 °C, insbesondere zwischen - 25 °C und 25 °C, ganz besonders bevorzugt zwischen -15 °C und +15 °C aufweisen. Die angegebenen Glasübergangstemperaturen beziehen sich auf Werte, die mit Hilfe von DSC-Messungen nach DIN-EN-ISO 11357-2:2014 bestimmt wurden. In einer bevorzugten Variante werden die SBR weiterhin durch Antioxidantien vor oxidativem und photooxidativem Abbau geschützt. Bevorzugte Antioxidantien sind phenolische Antioxidantien.

Enthalten die eingesetzten PUDs Hydroxylgruppen, so werden diese bevorzugt in Zusammensetzungen, wie Primern, verwendet, die einen Vernetzer, in Form der zuvor beschriebenen Vernetzerkomponente enthalten, der mit Hydroxlgruppen bei der Aushärtung reagiert. Bevorzugt liegt der Gehalt an Hydroxylgruppen berechnet auf den nichtflüchtigen Anteil (1 g/l h/125 °C) nach DIN EN ISO 3251 der PUD unter 3,5 Gew.-%, insbesondere unter 2,0 Gew.-% und besonders bevorzugt zwischen 0,5 und 1,5 Gew.-%.

Beispiele für reaktive Vernetzerkomponenten sind bevorzugt Polyisocyanate, auch latent reaktive oder blockierte Polyisocyanate, Polyaziridine sowie Polycarbodiimide, Melaminvernetzer wie Hexamethlylolmelamin oder Mischungen aus mindestens zwei hiervon. Die Vernetzer können dabei bevorzugt hydrophilierend und/oder emulgierend wirkende Bestandteile enthalten und/oder mit Lösemitteln verdünnt vorliegen, die eine Einarbeitung in die wässrigen Dispersionen erleichtern. Die Menge und die Funktionalität der Vernetzer ist insbesondere im Hinblick auf die gewünschten Eigenschaften des Lacks insbesondere bei thermischer Belastung abzustimmen und gegebenenfalls durch einfache Versuche zu ermitteln. Weiterhin ist die zur Reaktion des Vernetzers im Lack während der Aushärtung notwendige Temperatur bei der Auswahl des Vernetzers auf das Trocknungs- und Härtungsverfahren abzustimmen. Im Allgemeinen werden 0,5 bis 15,0 Gew.-% an Vernetzer auf den Festgehalt der SBR-Dispersion zugesetzt. Viele der möglichen Vernetzer reduzieren die Lagerfähigkeit der Zusammensetzung als Beschichtungsmittel, da sie bereits in der wässrigen Dispersion langsam reagieren. Der Zusatz der Vernetzer sollte daher entsprechend kurz, bevorzugt maximal 24 h, mehr bevorzugt maximal 10 h, besonders bevorzugt maximal 1 h vor der Applikation erfolgen. Je nach Grad der Hydrophilie sind für die Einarbeitung des Vernetzers in die wässrige Dispersion entsprechende an sich bekannte Methoden wie Einrühren mit entsprechender Scherkraft, Dispergieren oder über Mischer Einarbeiten zu verwenden.

Besonders bevorzugte Vernetzer sind Polyisocyanate. Als Polyisocyanate werden aromatische, araliphatische, aliphatische und cycloaliphatische Di- oder Polyisocyanate verwendet. Es können auch Mischungen solcher Di- oder Polyisocyanate eingesetzt werden. Beispiele geeigneter Di- oder Polyisocyanate sind Butylen-diisocyanat, Pentamethylendiisocyanat (PDI), Hexamethylendiisocyanat (HDI), Isophorondiisocyanat (IPDI), 2,2,4- und/oder 2,4,4-Trimethylhexamethylendiisocyanat, die isomeren Bis(4,4`-isocyanatocyclohexyl)methan und deren Mischungen beliebigen Isomerengehalts, Iso-cyanatomethyl-1,8-octandiisocyanat, 1,4-Cyclohexylendiisocyanat, die isomeren Cyclo-hexandimethylendiisocyanate, 1,4-Phenylendiisocyanat, 2,4- und/oder 2,6-Toluylendiiso-cyanat, die isomeren Xylendiisocyanate, 1,5-Naphthylendiisocyanat, 2,4'- oder 4,4'-Di phenylmethandiisocyanat, Triphe-nylmethan-4,4`,4"-triisocyanat oder deren Derivate mit Urethan-, Harnstoff-, Car-bodiimid-, Acylharnstoff-, Isocyanurat-, Allophanat-, Biuret-, Oxadiazintrion-, Uretdion-, Iminooxadiazindionstruktur und Mischungen aus mindestens zwei hiervon. Bevorzugt sind Polyisocyanate auf Basis oligomerisierter und/oder derivatisierter Diisocyanate, die durch geeignete Verfahren von überschüssigem Diisocyanat befreit wurden, insbesondere die des Pentamethylendiisocyanat, Hexamethy-lendiisocyanat, Isophorondiisocyanat und der isomeren Bis(4,4`-isocyanatocyclohexyl)-methan sowie Mischungen von mindestens zwei hiervon. Bevorzugt sind die oligomeren Isocyanurate, Uretdione, Allophanate und Iminooxadiazindione des PDI, des HDI, des IPDI und/oder der isomeren Bis(4,4`-isocyanatocyclo hexyl)methan sowie deren Mischungen. Besonders bevorzugt sind die oligomeren Isocyanurate, Uretdione und Allophanate des PDI und HDI.

Kommerziell erhältliche Polyiscoyanate sind unter dem Handelsnamen Desmodur^{®} und Bayhydur^{®} von Covestro AG, DE erhältlich. Insbesondere Desmodur^{®} N 3300, 3500, 3600, 3900, eco N 7300, Z 4470, sowie alle Bayhydur^{®} Typen. Weiterhin kommerziell erhältliche Polyiscoyanate sind Tolonate^{™} und Esaqua^{™}, Vencorex Holding SAS, Basonat^{®}, BASF SE, Wanate^{®}, Wanhua Chemical bv sowie Duranate^{®}, Asahi Kasei Europe GmbH.

Besonders bevorzugt sind Mischungen von nicht hydrophilierten und hydrophilierten Polyisocyanaten sowie Lösemitteln, die die Einarbeitung des Vernetzers in den wässrigen Primer begünstigen. Beispiele für bevorzugte Lösemittel sind 1-Methoxy-2-propylacetat, Propylencarbonat, Propylenglykoldiacetat, Butylglykolacetat, Dibasische Ester, Dipropylenglykoldimethylether, 3-Methoxybutyl-acetat, Butylacetat. Die Mengenverhältnis hydrophilierte zu nichthydrophilerte Polyisocyanate richten sich nach den in der für die Einarbeitung verfügbaren Scherkräfte. Je weniger hydrophiliertes Polyisocyanat verwendet wird, desto besser sind üblicherweise die Beständigkeiten des ausgehärteten Primers gegen insbesondere wässrige und andere polare Medien. Daher sollte die hydrophilierte Komponente einen möglichst geringen Anteil hieran haben. Der Anteil des Lösemittels sollte so gewählt werden, dass er die Viskosität des Vernetzers bevorzugt auf unter 1000 mPa s, insbesondere unter 500 mPa s bei 23 °C (nach ISO 3219/A.3) reduziert. Üblicherweise überschreitet der Lösemittelanteil daher 30 Gew.-% an der reaktiven Vernetzerkomponente, bezogen auf die Gesamtmenge der Vernetzerkomponente nicht. Bei Vernetzern mit geringer Viskosität und/oder sehr hoher verfügbarer Scherenergie für die Einarbeitung kann auf Lösemittel verzichtet werden.

Liegt in der erfindungsgemäßen Zusammensetzung, zum Beispiel als Primerkomponente, eine Polyurethandispersion mit Hydroxylgruppen vor, so ist die einzusetzende Stoffmenge der genannten Polyisocyanatvernetzer bevorzugt nahe am oder im stöchiometrischen Verhältnis von NCO:OH 0,8:1 bis 2:1, insbesondere 0,9:1 bis 1,2:1 zu wählen.

In einer bevorzugten Ausführungsform der Zusammensetzung wird als reaktive Vernetzerkomponente der gleiche Vernetzer eingesetzt, der auch für die spätere Deck- oder Klarlackschicht verwendet wird. Beispielsweise wird als Vernetzerkomponente für lösemittelhaltige Zweikomponenten-Polyurethanklarlacke häufig ein mit einer Mischung von Butylacetat und Solventnaphtha verdünntes Polyisocyanurat des HDI eingesetzt, beispielsweise Desmodur^{®} N 3368 BA/SN der Fa. Covestro AG, DE. Dieser Vernetzer kann auch durch Vermischen bei hoher Scherenergie z.B. mit einem statischen Mischer als Vernetzer für die erfindungsgemäße Zusammensetzung eingesetzt werden. Das Mischungsverhältnis von Vernetzer zu anderen Komponenten der Zusammensetzung beträgt dabei 1:2 bis 1:20, bevorzugt 1:5 bis 1:12, insbesondere 1:10.

Wenn eine Vernetzerkomponente verwendet wird, wird diese bevorzugt zu 0,5 bis 15,0 Gew.-%, insbesondere zu 2,0 bis 13,0 Gew.-% und besonders bevorzugt zu 5,0 bis 10,0 Gew.-%, bezogen auf den nichtflüchtigen Anteil (1 g/1 h/125 °C) nach DIN EN ISO 3251. Die Anteile an PUD und SBR erniedrigen sich in der Zusammensetzung entsprechend. Bevorzugt bleibt das Gewichtsverhältnis im nicht flüchtigen Anteil der Zusammensetzung von PUD zu SBR weiterhin in einem Bereich von 10:1 bis 1:3, bevorzugt in einem Bereich von 9:1 bis 1:2, bezogen auf deren Gewichtsanteile in dem nichtflüchtigen Anteil.

In einer bevorzugten Ausführungsform enthält die Zusammensetzung weiterhin mindestens ein elektrisch leitfähiges Pigment. Beispiele geeigneter elektrisch leitfähiger Pigmente sind Metallpigmente, Leitfähigkeitsruße, dotierte Perlglanzpigmente oder leitfähiges Bariumsulfat. Besonders gut geeignete elektrisch leitfähige Pigmente sind die Leitfähigkeitsruße. Durch Zusatz der leitfähigen Pigmente kann in auf die Primerbeschichtung folgenden Beschichtungsschritten mit einer elektrostatischen Spritzapplikation gearbeitet werden, so dass die Transfereffizienz der folgenden Schichten erhöht wird. Die Zusammensetzung beinhaltet das elektrisch leitfähige Pigment vorzugsweise in einem Bereich von 0,01 bis 10 Gew.-%, bevorzugt 0,1 bis 8 Gew.-%, besonders bevorzugt 0,5 bis 7 Gew.-%, ganz besonders bevorzugt 0,5 bis 6 Gew.-% und insbesondere bevorzugt 0,5 bis 5 Gew.-%, jeweils bezogen auf die Gesamtmenge der Zusammensetzung. Bevorzugt sind Leitruße sowie insbesondere für helle Farbtöne der Decklackschicht dotierte Perglanzpigmente, insbesondere Produkte der Iriotec^{®} 7300 Serie von Merck KGaA, DE.

Die Zusammensetzung weist bevorzugt lackübliche Additive in wirksamen Mengen, bevorzugt jeweils in einem Bereich von 0,1 bis 5 Gew.-%, bezogen auf die Gesamtmenge der Zusammensetzung auf. Beispiele geeigneter Additive sind
- organische und/oder anorganische Pigmente, Korrosionsschutzpigmente und/oder Füllstoffe wie Calciumsulfat, Bariumsulfat, Silikate wie Talk, Bentonit oder Kaolin, Kieselsäuren, Oxide wie Aluminiumhydroxid oder Magnesiumhydroxid, Nanopartikel, organische Füllstoffe wie Textilfasern, Cellulosefasern, Polyethylenfasern oder Holzmehl, Titandioxid, Ruß, Eisenoxid, Zinkphosphat oder Bleisilikat; diese Additive können auch über Pigmentpasten in die erfindungsgemäße Zusammensetzung eingearbeitet werden;
- Radikalfänger;
- organische Korrosionsinhibitoren;
- Katalysatoren für die Vernetzung wie anorganische und organische Salze und Komplexe des Zinns, Bleis, Antimons, Wismuts, Eisens oder Mangans, vorzugsweise organische Salze und Komplexe des Wismuts und des Zinns, insbesondere Wismutlactat, -ethylhexanoat oder - dimethylolpropionat, Dibutylzinnoxid oder Dibutylzinndilaurat ;
- Slipadditive;
- Polymerisationsinhibitoren und Lichtschutzmittel;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufshilfsmittel;
- filmbildende Hilfsmittel wie Cellulose-Derivate;
- Flammschutzmittel;
- niedermolekulare, oligomere und hochmolekulare Reaktivverdünner, die an der thermischen Vernetzung teilnehmen können, insbesondere Polyole wie Tricyclodecandimethanol, dendrimere Polyole, hyperverzweigte Polyester, Polyole auf der Basis von Metatheseoligomeren oder verzweigten Alkanen mit mehr als acht Kohlenstoffatomen im Molekül;
- Antikratermittel;
- wassermischbare oder dispergierfähige organische Lösemittel und/oder
- rheologiesteuernde Additive, vernetzte polymere Mikroteilchen, wie sie beispielsweise in der EP-A-0 008 127 offenbart sind; anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte Polyacrylate; oder assoziative Verdickungsmittel auf Polyurethanbasis.

Bevorzugt enthält die Zusammensetzung mindestens einen, bevorzugt mehrere Füllstoffe.

Zur Herstellung der erfindungsgemäßen Zusammensetzung werden die einzelnen Bestandteile gemäß in der Herstellung von Lacken gebräuchlichen Misch- und Dispergierverfahren gemischt. Pigmente und Füllstoffe werden bevorzugt mit Dispergieradditiven und eventuell Teilen der wässrigen Polymere der Zusammensetzung und gegebenenfalls weiteren Additiven wie Entschäumern in Dissolvern oder Mühlen angerieben. Im Anschluss erfolgt dann das Auflacken mit den weiteren Bestandteilen der Zusammensetzung. Bei Verwendung von Vernetzern als Vernetzerkomponente, die bereits bei Lagerung mit Bestandteilen der Zusammensetzung reagieren würden, erfolgt die Zugabe erst entsprechend kurz oder unmittelbar vor der Applikation gegebenenfalls auch unter Verwendung von 2K Geräten.

Die Zusammensetzung zur Beschichtung wird bevorzugt für die Beschichtung und/oder Grundierung von Kunststoffen, aus denen die zu beschichtenden Substrate gefertigt sind, eingesetzt. Beispiele für geeignete Kunststoffe für Substrate sind ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1). Diese können auch in Form von Folien oder als Glas- oder Carbonfaser verstärkte Kunststoffe vorliegen. Je nach eingesetztem Kunststoff und Qualität der zu beschichtenden Oberfläche kann vor der Applikation der Zusammensetzung ein Reinigungsschritt und/oder ein Aktivierungsschritt erfolgen. Geeignete Reinigungsverfahren sind von der Lackierung von Kunststoffteilen bekannt und nutzen beispielsweise Waschverfahren mit wässrigen und/oder lösemittelhaltigen Reinigern, mechanische Reinigungen mit Bürsten und/oder Federn sowie Strahlverfahren z.B. mit Kohlendioxidschnee. Bestimmte Oberflächen wie die von PP sind zu wenig polar für eine Beschichtung mit wässrigen Primern, so dass eine Aktivierung der Oberfläche durch bekannte Verfahren wie Beflämmen, Corona- oder Plasmabehandlung, Behandlung mit Ozon oder Fluorierung sinnvoll ist.

Geeignete Methoden zum Aufbringen der erfindungsgemäßen Zusammensetzung auf das Kunststoffsubstrat sind beispielsweise Drucken, Streichen, Rollen, Gießen, Tauchen und/oder bevorzugt Spritzen wie beispielsweise Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Geeignete Schichtdicken richten sich nach dem Applikationsverfahren und betragen als Trockenschichtdicke betrachtet üblicherweise zwischen 5 und 50 µm, bevorzugt zwischen 10 und 30 µm, insbesondere zwischen 12 und 22 µm.

Im Anschluss an das Aufbringen der Zusammensetzung wird zunächst Wasser und gegebenenfalls weitere flüchtige Substanzen wie organische Lösemittel mit in der Lackiertechnik üblichen Methoden entfernt. Bevorzugt erfolgt das Entfernen von Wasser durch Trocknen bei erhöhten Temperaturen, z.B. in einem Bereich von 40 bis 250 °C, bevorzugt von 40 bis 100 °C in Öfen und mit bewegter und gegebenenfalls auch entfeuchteter Luft (Konvektionsöfen, Düsentrockner) sowie Wärmestrahlung (IR, NIR). Weiterhin können Mikrowellen zum Einsatz kommen. Es ist möglich, mehrere dieser Trocknungsverfahren zu kombinieren. Vorteilhafterweise werden die Bedingungen für die Trocknung so gewählt, dass die maximal erreichte Temperatur unter der Grenze bleibt, bei der sich das Substrat unkontrolliert verformt oder sonstige Schäden erleidet.

Unmittelbar im Anschluss oder auch erst nach längerer Lagerzeit kann sich eine Überlackierung des mit der mit der erfindungsgemäßen Beschichtung lackierten/grundierten Substrats anschließen. Das Überlackieren kann einschichtig mit einem Decklack oder bevorzugt mehrschichtig mit Basis- und Klarlack erfolgen.

Ein weiterer Gegenstand der Erfindung gemäß Anspruch 12 ist eine Verwendung der erfindungsgemäßen Zusammensetzung enthaltend eine wässrige Polyurethandispersion (PUD) und eine Styrol-Polybutadien-Copolymer-Dispersion (SBR), zur Beschichtung von Substraten, insbesondere thermoplastischen Substraten, wobei die Zusammensetzung die mindestens eine Polyurethandispersion in einem Bereich von 33 bis 90 Gew.-%, bezogen auf den nicht flüchtigen Anteil der Zusammensetzung beinhaltet, bestimmt nach Verdampfen der Lösungsmittel bzw. Dispergiermittel und Behandlung der Zusammensetzung von 1 g für 1 h bei 125 °C nach DIN EN ISO 32511. Bevorzugte Substrate sind solche, die zuvor im Zusammenhang mit der erfindungsgemäßen Zusammensetzung genannt wurden.

Ein weiterer Gegenstand der Erfindung ist ein Mehrschichtaufbau gemäß Anspruch 13 insbesondere ein mehrschichtiger Lackaufbau enthaltend die oben genannte erfindungsgemäße Zusammensetzung. Sämtliche Merkmale, wie Eigenschaften, Bestandteile und deren Anteile in der Zusammensetzung gelten auch für die Zusammensetzung in dem Mehrschichtaufbau. Bevorzugt weist der Mehrschichtaufbau mindestens zwei Schichten auf, wovon mindestens eine der Schichten die erfindungsgemäße Zusammensetzung beinhaltet. Der Mehrschichtaufbau ist bevorzugt auf einem Substrat aufgebracht, wobei das Substrat mindestens eine Oberfläche aufweist, die ausgewählt ist aus der Gruppe bestehend aus einem Polymer, einem Metall, insbesondere Stahl, einem Holz, einer Keramik, einem Glas oder einer Kombination aus mindestens zwei hiervon. Bevorzugt weist die Oberfläche des Substrats ein Polymer auf oder besteht daraus. Das Polymer ist bevorzugt ausgewählt aus der Gruppe bestehend aus Polypropylen, Polyethylen, Polycarbonat, Polyamid, Polyimid, Polystyrol, Polyethylenterephthalat, Polybuthylenterephthalat, Polymethylmethacrylat, Polyurethan, Polyacrylat oder Mischungen oder Copolymere aus mindestens zwei hieraus. Bevorzugt Substrate sind solche, wie sie zuvor im Zusammenhang mit der erfindungsgemäßen Zusammensetzung genannt wurden.

Die Anzahl an aufzubringenden Basislackschichten und Klarlackschichten sowie der Decklackschicht ist jeweils nicht auf eine Schicht begrenzt. Es ist es auch möglich, zwei, drei, vier oder mehr Basislackschichten aufzubringen bzw. mehrfach abwechselnd Basis- und Klarschichten aufzubringen. Die einzelnen Schichten können dabei jeweils vollständig getrocknet oder nur teilweise getrocknet werden, bevor die nächste Schicht aufgetragen wird. Letzteres wird auch als "nass in nass"-Applikation bezeichnet. Auch bei Überlackierung mit einem Decklack ist die Anzahl der Schichten nicht auf eine begrenzt.

Die erfindungsgemäße Zusammensetzung eignet sich sowohl zur Überlackierung mit wässrigen als auch lösemittelhaltigen und sogar mit pulverförmigen Lacken. Bevorzugt ist die Überlackierung mit einer oder zwei Schichten eines wässrigen Basislacks insbesondere per elektrostatischer Spritzapplikation, die Zwischentrocknung zur Entfernung des Hauptteils an Wasser und gegebenenfalls Lösemittels der Basislackschicht, die anschließende Beschichtung mit einem lösemittelhaltigen 2K Polyurethanklarlacks sowie anschließende Trocknung und Härtung des Lackaufbaus durch die oben genannten üblichen Methoden zur Lacktrocknung und - härtung.

Bevorzugt werden mit der erfindungsgemäßen Zusammensetzung zur Beschichtung Kunststoffe im Automobilbereich beschichtet und/oder grundiert.

Ein weiterer Gegenstand der Erfindung gemäß Anspruch 14 ist ein Gegenstand, insbesondere ein Automobil, enthaltend ein Substrat, das mit der oben genannten erfindungsgemäße Zusammensetzung zur Beschichtung beschichtet ist.

Insbesondere sind die Kunststoffe, die mit der erfindungsgemäßen Zusammensetzung beschichtete wurden im Außenbereich des Automobil angeordnet, beispielsweise in Form von Stoßfängern, Zierleisten, Schwellern, Windabweisern, Türgriffen, Kühlergrillen, Antennenghäusen, Verkleidungen, Abdeckungen oder Außenspiegelgehäusen. Diese sogenannten Anbauteile können sowohl in Wagenfarbe oder in Kontrastfarbe überlackiert werden.

### Experimenteller Teil

Die Erfindung wird nachfolgend anhand von Beispielen näher erläutert.

### Verwendete Substanzen:

Die Substanzen wurden, soweit nicht anders erwähnt, ohne weitere Reinigung oder Vorbehandlung eingesetzt.

Bayhydrol^{®} U 2757, Covestro AG, DE, aliphatische, anionische hydroxyfunktionelle Polyurethan-Dispersion auf Basis einer Mischung von aromatischem Polyesterdiol und eines Polycarbonatdiols, colöserfrei. Bindemittel zur Herstellung von wasserverdünnbaren 2K-PUR-Lacken, ca. 52%ig in Wasser/N,N-Dimethylethanolamin, Hydroxylgehalt ca. 1,8% (rechnerisch) bezogen auf den nichtflüchtigen Anteil (1 g/1 h/125 °C) nach DIN EN ISO 3251, Angaben gemäß Datenblatt Ausgabe 2015-09-01.

Bayhydrol^{®} UH 2606, Covestro AG, DE, aliphatische, polycarbonathaltige anionische Polyurethandispersion, colösemittelfrei. Bindemittel zur Herstellung von wasserverdünnbaren Beschichtungen für Kunststoffsubstrate und Holzwerkstoffe, ca. 35 %ig in Wasser, neutralisiert mit N-Ethyldiisopropylamin (als Salz gebunden) im Verhältnis: ca. 35 : 64 : 1, Angaben gemäß Datenblatt Ausgabe 2015-09-01.

Desmodur^{®} N 3600, Covestro AG, DE, Polyisocyanat auf Basis von Trimerisaten des Hexamethylendiisocyanats, NCO-Gehalt 23,0% (ISO 11909), Viskosität 1200 mPa s bei 23 °C (ISO 3219/A.3), Angaben gemäß Datenblatt Ausgabe 2017-06-01.

Bayhydur^{®} XP 2655, Covestro AG, DE, hydrophiles Polyisocyanat auf Basis von Trimerisaten des Hexamethylendiisocyanats, NCO-Gehalt 20,8% (ISO 11909), Viskosität 3500 mPa s bei 23 °C (ISO 3219/A.3), Angaben gemäß Datenblatt Ausgabe 2017-06-01.

Litex^{®} SX 1024, Synthomer Deutschland GmbH, wässrige kolloidale Dispersion eines Styrol-Butadien Copolymers mit Carboxylgruppen, enthaltend ein anionisches Emulgatorsystem, stabilisiert mit einem Antioxidans. Festgehalt 50,0%, pH-Wert 7,0, Visosität <400 mPas, Glasübergangstemperatur -15 °C, mittlere Teilchengröße 0,15 µm, Angaben gemäß Technical Data Sheet, Revision: 3, 10/30/2014.

Litex^{®} S 7140, Synthomer Deutschland GmbH, wässrige, anionische Dispersion eines carboxylierten Styrol-Butadien Copolymers, stabilisiert mit einem nichtfärbenden Antioxidans. Festgehalt 51,0%, pH-Wert 8,0, Visosität <300 mPas, Glasübergangstemperatur 48 °C, mittlere Teilchengröße 190 nm, Angaben gemäß Technical Data Sheet, Revision: 4, 10/30/2014.

Litex^{®} S 7155, Synthomer Deutschland GmbH, anionische Dispersion eines carboxylierten Styrol-Butadien Copolymers, stabilisiert mit einem nichtfärbenden Antioxidans. Festgehalt 50,0%, pH-Wert 7,75, Visosität <750 mPas, Glasübergangstemperatur -26 °C, mittlere Teilchengröße 195 nm, Angaben gemäß Technical Data Sheet, Revision: 4, 10/30/2014.

Litex^{®} PX 9306, Synthomer Deutschland GmbH, wässrige, anionische, carboxylierte Dispersion eines Styrol-Butadien Copolymers. Festgehalt 50,0%, pH-Wert 6,7, Visosität <300 mPas, Glasübergangstemperatur 12 °C, Angaben gemäß Technical Data Sheet, Revision: 4, 10/30/2014.
Dispex^{®} Ultra FA 4436, BASF SE, DE, Dispergierhilfsmittel
Surfynol^{®} 104 E, Evonik Resource Efficiency GmbH, DE, nichtionisches Benetzungs-, Entschäumungs- und Dispergierhilfsmittel
Byk^{®} 348, Byk Chemie GmbH, DE, Silikontensid zur Verbesserung der Untergrundbenetzung
R-KB-2, Sachtleben Chemie GmbH, Weißpigment
Blanc fixe micro, Sachtleben Chemie GmbH, Füllstoff
Finntalc^{®} M-15 AW, Mondo Minerals B.V., NL, Talkum
Bayferrox^{®} 318 M, Lanxess AG, DE, Eisenoxidpigment
Aerosil^{®} R 972, Evonik Resource Efficiency GmbH, DE, pyrogene Kieselsäure
N,N-Dimethylethanolamin (DMEA), Aldrich, DE, Neutralisationsmittel
Borchigel^{®} PW 25, OMG Borchers, DE, Polyurethanverdicker
1-Methoxy-2-propylacetat (MPA), BASF SE, DE, Lösemittel
Hydrobasislack schwarz R 2341, Karl Wörwag Farben- und Lackfabrik GmbH&Co KG, DE, schwarzer wässriger Basislack, insbesondere für mit Grundierung versehene Kunststoffuntergründe geeignet.

Woeropur Klarlack R 3209, Karl Wörwag Farben- und Lackfabrik GmbH&Co KG, DE, lösemittelbasierter zweikomponentiger Polyurethanlack bestehend aus Stammlack und Härter für die Lackierung von Kunststoffsubstraten, insbesondere für das Überlackieren von Hydrobasislacken R 2341 geeignet.

### Kunststoffsubstrate:

Die folgenden Thermoplaste wurden in Form von rechteckigen Prüfplatten (mindestens in der Größe 13 x 18 cm) verwendet. Zusätzlich wurde eine Polycarbonatfolie als Substrat verwendet. Alle Platten bzw. Folien wurden vor der Beschichtung mit einem mit Ethylacetat getränkten sauberen Tuch abgewischt.
1. Bayblend^{®} T65 XF: Polycarbonat-Polyacrylnitrilpolybutadienpolystyrol-Copolymer-Blend [PC/ABS], Covestro AG, DE
2. Pocan T 7323 : Polybutylenterephthalat-Polyethylenterephthalat-Copolymerblend mit 20 % Glasfasern [PBT+PET], Lanxess Deutschland GmbH, DE
3. Durethan BKV 30 H2.0 OEF : Polyamid 6 mit 30 % Glasfasern [PA6], Lanxess Deutschland GmbH, DE
4. Durethan BKV 60 H2.0 OEF : Polyamid 6 mit 30 % Glasfasern [PA6], Lanxess Deutschland GmbH, DE
5. Makrofol DE 1-1 CG 000000, Polycarbonatfolie der Schichtdicke 500 µm [PC], Covestro AG, DE

### Prüfmethoden:

1. Auslaufzeit 4 mm DIN Becher gemäß DIN EN ISO 2431:2012
2. Prüfung der Haftfestigkeit von einer Beschichtung auf einem Substrat mittels Gitterschnitt mit Mehrschneidengerät mit Handgriff nach DIN EN ISO 2409:2013 (Klingenabstand 1 mm nur für die Primerschicht oder 2 mm für einen mehrschichtigen Aufbau Primer, Basislack, Klarlack): Nach Durchführen der kreuzförmigen Schnitte bis auf den Untergrund wurden lose Partikel mit einer Bürste entfernt. Anschließend wurde Klebeband der Marke "Scotch Pressure Sensitive Tape" von 3M zunächst mittels Daumennagel auf das Schnittgitter aufgerieben und ruckartig möglichst senkrecht nach oben von der Beschichtung abgezogen. Das Schadensbild wurde mit einer Lupe abgemustert und anhand der in der Norm abgebildeten Schnittbilder bewertet. GT 0 bedeutet, dass die Schnittbilder vollkommen glatt sind und dass keine Teilstücke abgeplatzt sind.
3. Dampfstrahlprüfung nach DIN EN ISO 16925:2014 an Kunststoffteilen, beschichtet mit einem Primer und einer Decklackierung: Die Prüfung wurde nach dem Verfahren A 3.9 mit einem Ritzstichel nach Sikkens und einem Dampfstrahlgerät der Fa. Walther durchgeführt. Die Teile wurden vor der Prüfung bei 23±2 °C und 50±5 % Luftfeuchte mindestens 16 h konditioniert. Bei Kennwerten KW 0 und KW 1 gilt die Prüfung als bestanden; bei KW 2 als bedingt bestanden und bei KW 3 bis 5 nicht bestanden. Ein dem Kennwert 1 oder 2 nachgestellter kleiner Buchstabe (a, b oder c) dient zur näheren Erläuterung des Schadensbilds wie in der Norm angegeben.

### Lackformulierungen:

Die folgenden Lackformulierungen (Tabelle 1) wurden wie folgt hergestellt. Das Vergleichsbeispiel 1[V] entsprach dabei der von Covestro AG, DE veröffentlichten Startformulierung für wässrige, zweikomponentige Kunststoffprimer PCO-0148-PS (Edition 2016-09-13). Zur Herstellung sämtlicher Lackformulierungen aus Tabelle 1 wurden jeweils die Bindemittel (Teil 1) vorgelegt und die Bestandteile unter Teil 2 in der angegebenen Reihenfolge eingewogen, mit Glasperlen (2,85 - 3,45 mm) 1:1 (nach Volumen) versetzt und 30 Minuten mit einem Laborschüttler Skandex BA-S20 der Firma Lau angerieben. Anschließend wurden die Glasperlen abgesiebt. In den erkalteten Lack wurde unter Rühren mit einem Dissolver (Dissolverscheibe 5 cm, bei 800 U/min) der Verdicker (Teil 3) langsam zudosiert und anschließend 5 Minuten weitergerührt. Die angeriebenen Lacke wurden mit deionisertem Wasser auf eine Auslaufzeit im 4 mm DIN Becher von 25 bis 30 s eingestellt. Tabelle 1 enthält die jeweils dazu benötigten Wassermengen unter Teil 4. Kurz vor Applikation wurde Teil 5 unter Rühren mit einem Flügelrührer (5 min, 700 U/min) eingearbeitet. Anschließend wurde die Auslaufzeit im 4 mm Becher bestimmt und die Primer wurden innerhalb von 30 min appliziert.

**Tabelle 1: Lackformulierungen für Primer (1[V] - Vergleich, 2 bis 7 - erfindungsgemäß)**

| | 1[V] | 2 | 3 | 4 | 5 | 6 | 7 |
|---|---|---|---|---|---|---|---|
| **Teil 1** | | | | | | | |
| Bayhydrol^{®} U 2757 | 79,1 | 55,1 | 55,1 | 55,1 | 55,1 | 51,5 | 51,6 |
| Bayhydrol^{®} UH 2606 | 124,3 | 86,6 | 86,6 | 86,6 | 86,6 | 153,0 | 76,7 |
| Litex^{®} SX 1024 | -- | 60,6 | -- | -- | -- | 53,6 | 107,3 |
| Litex^{®} S 7140 | -- | -- | 59,4 | -- | -- | -- | -- |
| Litex^{®} S 7155 | -- | -- | -- | 60,6 -- | -- | -- | -- |
| Litex^{®} PX 9306 | -- | -- | -- | | 60,6 | -- | -- |
| | | | | | | | |

| **Teil 2** | | | | | | | |
|---|---|---|---|---|---|---|---|
| Dispex^{®} Ultra FA 4436 | 1,6 | 1,6 | 1,6 | 1,6 | 1,6 | 1,9 | 1,9 |
| Surfynol^{®} 104 E | 1,0 | 1,0 | 1,0 | 1,0 | 1,0 | 0,8 | 0,8 |
| Byk^{®} 348 | 0,7 | 0,7 | 0,7 | 0,7 | 0,7 | 1,2 | 1,2 |
| R-KB-2 | 30,0 | 30,0 | 30,0 | 30,0 | 30,0 | 52,1 | 52,1 |
| Blanc fixe micro | 45,0 | 45,0 | 45,0 | 45,0 | 45,0 | 34,7 | 34,7 |
| Finntalc^{®} M-15 AW | 15,0 | 15,0 | 15,0 | 15,0 | 15,0 | 17,4 | 17,4 |
| Bayferrox^{®} 318 M | 1,0 | 1,0 | 1,0 | 1,0 | 1,0 | 1,2 | 1,2 |
| Aerosil^{®} R 972 | 2,6 | 2,6 | 2,6 | 2,6 | 2,6 | 3,0 | 3,0 |
| DMEA (10%ig in Wasser) | -- | -- | -- | -- | -- | -- | -- |
| Wasser | 30 | 55 | 40 | 40 | 35 | 30 | 50 |
| | | | | | | | |

| **Teil 3** | | | | | | | |
|---|---|---|---|---|---|---|---|
| Borchigel^{®} PW 25 | 0,7 | 0,7 | 0,7 | 0,7 | 0,7 | 0,8 | 0,8 |
| | | | | | | | |

| **Teil 4** | | | | | | | |
|---|---|---|---|---|---|---|---|
| Wasser zur Einstellung auf 25-30 s Auslaufzeit | 36,8 | 60,8 | 36,5 | 46,9 | 35,7 | 34,9 | 57,5 |
| | | | | | | | |

| **Teil 5** | | | | | | | |
|---|---|---|---|---|---|---|---|
| Desmodur^{®} N 3600 : Bayhydur^{®} XP 2655 (70 :30) 75%ig in MPA | 17,3 | 12,1 | 12,1 | 12,1 | 12,1 | 11,3 | 11,3 |
| Summe gesamt | 385,1 | 427,9 | 387,3 | 398,9 | 382,7 | 448,4 | 467,5 |
| Berechneter nichtflüchtiger Anteil [%] | 51,2 | 46,1 | 50,9 | 49,4 | 51,5 | 50,9 | 48,8 |
| Gemessene Auslaufzeit [s] | 25 | 26 | 24 | 22 | 24 | 24 | 24 |
| Berechnetes molares Verhältnis NCO : OH | 1,5:1 | 1,5:1 | 1,51 | 1,5:1 | 1,5:1 | 1,5:1 | 1,5:1 |
| 100g Summe Teile 1-3 zu x g Teil 4 | 4,7 | 2,9 | 3,2 | 3,1 | 3,3 | 2,6 | 2,5 |

### Lackapplikation

Für die Prüfung der Haftfestigkeit vor und nach einer Lagerung bei Hydrolysebedingungen von 90 °C, 90 % relativer Luftfeuchtigkeit für 72 h wurde zunächst der Primer, in Form der Lackzusammensetzungen 1V, 2 bis 7, auf die Kunststoffsubstrate vollflächig appliziert und getrocknet. Anschließend wurde die Hälfte der Fläche abgedeckt und die andere Hälfte mit schwarzem Hydrobasislack R 2341 und dann mit Klarlack R 3209 beschichtet. Die Haftfestigkeit der Primer und der Gesamtaufbauten aus Primer, Basis- und Klarlack wurde jeweils nach Alterung der beschichteten Platten für 16 h bei 60 °C im Umluftofen und 8 h bei Zimmertemperatur vor und nach der Lagerung unter Hydrolysebedingungen mittels Gitterschnitt (1 mm Klingenabstand für die Primer, 2 mm Abstand für die Gesamtaufbauten) geprüft.

Für die Prüfung der Haftfestigkeit nach Dampfstrahlprüfung wurden die Kunststoffsubstrate aus Bayblend^{®} jeweils vollflächig nacheinander mit den Primern und dann mit Basislack und Klarlack beschichtet. Prüfung erfolgte jeweils nach Alterung der beschichteten Platten für 16 h bei 60 °C im Umluftofen und anschließender Konditionierung im Normklima.

Die Applikation der Primer erfolgte bei beiden Prüfserien mit einer Fließbecherpistole Satajet RP, 1,3 mm, Luftdruck 2,1 bar in 1 Kreuzgang, um eine Schichtdicke (trocken) von 20-25 µm zu erzeugen. Nach Applikation wurde der Primer 10 min bei Zimmertemperatur, 30 min bei 80 °C im Umluftofen getrocknet und für 16 h bei Zimmertemperatur gelagert. Die Applikation des Basislacks erfolgte mit einer Fließbecherpistole Satajet HVLP, 1,2 mm, Luftdruck 2,1 bar in 1 Kreuzgang, um eine Schichtdicke (trocken) von 9-12 µm zu erzeugen. Der Basislack wurde 10 min bei Zimmertemperatur, 30 min bei 80 °C im Umluftofen getrocknet und für 3 h bei Zimmertemperatur gelagert. Die Applikation des Klarlacks erfolgte nach Vermischen von Stammlack und Härter nach Angaben des Herstellers mit einer Fließbecherpistole Satajet HVLP, 1,2 mm, Luftdruck 2,1 bar in 1 Kreuzgang, um eine Schichtdicke (trocken) von 25-32 µm zu erzeugen. Der Klarlack wurde 10 min bei Zimmertemperatur, 45 min bei 80 °C im Umluftofen getrocknet. Anschließend noch 16 h bei 60°C gealtert.

### Ergebnisse Gitterschnittprüfung vor und nach Lagerung unter Hydrolysebedingungen

Alle Primer (1[V], 2 - 7) und alle Gesamtaufbauten aus Primer (1[V], 2 - 7), Basislack und Klarlack zeigten auf allen getesteten Kunststoffuntergründen (Bayblend^{®}, Pocan^{®}, beide Durethan^{®}-Typen und Makrofol^{®}) hervorragende Ausgangshaftfestigkeit (alle GT 0) und unveränderte Haftfestigkeit nach Lagerung unter Hydrolysebedingungen (alle GT 0) und nach Regeneration (alle GT 0).

Dieses Ergebnis zeigt, dass sich die erfindungsgemäßen Primerformulierungen trotz eines Anteils an kostengünstigeren Bindemitteln genauso zur Herstellung von Primern mit hervorragender Haftfestigkeit eignen wie das Vergleichsbeispiel (1[V]), welches nur Bindemittel auf Basis von Polyurethanen enthält.

### Ergebnisse Dampfstrahlprüfung

**Tabelle 2: Ergebnisse der Dampfstrahlprüfung an mit Primer, Basislack und Klarlack be-schichteten Bayblend^{®}-Platten (Primer 1[V] - Vergleich, 2 bis 7 - erfindungsgemäß).**

| | 1[V] | 2 | 3 | 4 | 5 | 6 | 7 |
|---|---|---|---|---|---|---|---|
| Kennwerte | 2a | 2a | 2a | 2a | 1a | 1c | 1c |
| Bewertung | Bedingt | Bedingt | Bedingt | Bedingt | OK | OK | OK |

Die Ergebnisse des Dampfstrahltests zeigen, dass die lackierten Kunststoffplatten mit dem erfindungsgemäßen Primern mindestens so gute Beständigkeit nach der Belastung mit dem Dampfstrahl aufweisen wie das Vergleichsbeispiel (1[V]), welches nur Bindemittel auf Basis von Polyurethanen enthält.

## Patentansprüche

1. Eine Zusammensetzung zur Beschichtung von Substraten, insbesondere zur Beschichtung von thermoplastischen Substraten, enthaltend mindestens eine wässrige gegebenenfalls hydroxyfunktionelle, anionische oder nichtionische Polyurethandispersion (PUD) und mindestens eine anionische Styrol-Polybutadien-Copolymer-Dispersion (SBR),
**dadurch gekennzeichnet, dass**
die Zusammensetzung die mindestens eine Polyurethandispersion in einem Bereich von 33 bis 90 Gew.-%, bezogen auf den nicht flüchtigen Anteil der Zusammensetzung beinhaltet, bestimmt nach Verdampfen der Lösungsmittel bzw. Dispergiermittel und Behandlung der Zusammensetzung von 1 g für 1 h bei 125 °C nach DIN EN ISO 32511.

2. Die Zusammensetzung nach Anspruch 1, wobei das Gewichtsverhältnis von der mindestens einen Polyurethandispersion zu der anionischen Styrol-Polybutadien-Copolymer-Dispersion in einem Bereich von 10:1 bis 1:3, bevorzugt in einem Bereich von 9:1 bis 1:2, bezogen auf den nicht flüchtigen Anteil der Zusammensetzung, liegt.

3. Die Zusammensetzung gemäß Anspruch 1 oder 2, wobei die Zusammensetzung die mindestens eine anionische Styrol-Polybutadien-Copolymer-Dispersion in einem Bereich von 9 bis 67 Gew.-%, bezogen auf den nicht flüchtigen Anteil der Zusammensetzung beinhaltet.

4. Die Zusammensetzung gemäß einem der vorhergehenden Ansprüche, wobei die Zusammensetzung mindestens eine reaktive Vernetzerkomponente, insbesondere ein Polyisocyanat, bevorzugt in einem Bereich von 0,01 bis 5 Gew.-%, bezogen auf den nicht flüchtigen Anteil der Zusammensetzung beinhaltet.

5. Die Zusammensetzung gemäß dem vorhergehenden Anspruch, wobei die Vernetzerkomponente ein Polyisocyanat mit einer Funktionalität in einem Bereich von 1,5 bis 6, bevorzugt in einem Bereich von 1,8 bis 4, besonders bevorzugt in einem Bereich von 2 bis 3,5 aufweist, wobei die Vernetzerkomponente das Polyisocyanat bevorzugt in einem Bereich von 30 bis 100 Gew.-%, bezogen auf die Gesamtmasse der Vernetzerkomponente beinhaltet.

6. Die Zusammensetzung gemäß einem der vorhergehenden Ansprüche, wobei die Polyurethandispersion eine Polyurethan beinhaltet, erhältlich aus der Umsetzung von mindestens der Komponenten:
(A) wenigstens einer Diol- und/oder Polyolkomponente;
(B) wenigstens einer Polyisocyanatkomponente;
(C) wenigstens einer, mindestens eine hydrophilierende Gruppe aufweisende, Hydrophilierungs-Komponente;
(D) gegebenenfalls mono-, di-, und/oder tri-aminofunktionelle und/oder hydroxyaminofunktionelle Verbindungen;
(E) gegebenenfalls mindestens eine sonstige isocyanatreaktive Verbindung.

7. Die Zusammensetzung nach Anspruch 6, wobei die Polyolkomponente (A) ein zahlenmittleres Molekulargewicht Mn in einem Bereich von 62 bis 18000 g/mol, besonders bevorzugt von 62 bis 4000 g/mol aufweist, insbesondere ausgewählt aus der Gruppe bestehend aus einem Polyetherpolyol, einem Polyesterpolyol, einem Polycarbonatepolyol, einem Polylactonepolyol und einem Polyamidpolyol oder Mischungen aus mindestens zwei hiervon, insbesondere einem Polyesterpolyol oder eine Polycarbonatpolyol.

8. Die Zusammensetzung nach Anspruch 6 oder 7, wobei die wenigstens eine Polyisocyanatkomponente (B) ausgewählt ist aus der Gruppe bestehend aus Tetramethylendiisocyanat, Pentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan (= IPDI, Isophorondiisocyanat) , 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus mindestens zwei dieser Verbindungen bestehende Gemische.

9. Die Zusammensetzung nach einem der Ansprüche 6 bis 8, wobei die hydrophilierende Gruppe der Hydrophilierungs-Komponente (C) ausgewählt ist aus der Gruppe bestehend aus einer Sulphonatgruppe, einer Carboxylatgruppen oder einer Kombination aus mindestens zwei hieraus, insbesondere ausgewählt aus der Gruppe bestehend aus Natrium-, Lithium-, Kalium-, tert.- Amin-Salze der N-(2-Aminoethyl)-2-aminoethansulfonsäure, der N-(3-Aminopropyl)-2-aminoethansulfonsäure, der N-(3-Aminoproyl)-3-aminopro-pansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 mol Diamin wie z.B. 1,2-Ethandiamin oder Isophorondiamin mit 2 mol Acrylsäure oder Maleinsäure sowie Gemische aus mindestens zwei hiervon.

10. Die Zusammensetzung nach einem der Ansprüche 6 bis 9, wobei die mono-, di-, und/oder tri-aminofunktionelle und/oder hydroxyaminofunktionelle Verbindungen (D) ausgewählt sind aus der Gruppe bestehend aus aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin oder Mischungen aus mindestens zwei hiervon, insbesondere 1,2-Ethandiamin, 1-Amino-3,3,5-trimethyl-5-amino-methyl-cyclohexan, Diethylentriamin, Diethanolamin, Ethanolamin, N-(2-Hydroxyethyl)-ethylendiamin und N,N-Bis(2-Hydroxyethyl)-ethylendiamin oder Mischungen aus mindestens zwei hiervon.

11. Die Zusammensetzung nach einem der Ansprüche 6 bis 10, wobei die Zusammensetzung mindestens ein elektrisch leitfähiges Pigment enthält, vorzugsweise in einem Bereich von 0,01 bis 10 Gew.-%, bevorzugt 0,1 bis 8 Gew.-%, besonders bevorzugt 0,5 bis 7 Gew.-%, ganz besonders bevorzugt 0,5 bis 6 Gew.-% und insbesondere bevorzugt 0,5 bis 5 Gew.-%, jeweils bezogen auf die Gesamtmenge der Zusammensetzung.

12. Verwendung einer Zusammensetzung enthaltend eine wässrige Polyurethandispersion (PUD) und eine anionische Styrol-Polybutadien-Copolymer-Dispersion (SBR), insbesondere der Zusammensetzung gemäß einem der Ansprüche 1 bis 11 zur Beschichtung von Substraten, insbesondere thermoplastischen Substraten, **dadurch gekennzeichnet, dass** die Zusammensetzung die mindestens eine Polyurethandispersion in einem Bereich von 33 bis 90 Gew.-%, bezogen auf den nicht flüchtigen Anteil der Zusammensetzung beinhaltet, bestimmt nach Verdampfen der Lösungsmittel bzw. Dispergiermittel und Behandlung der Zusammensetzung von 1 g für 1 h bei 125 °C nach DIN EN ISO 32511.

13. Ein Mehrschichtaufbau, insbesondere ein mehrschichtiger Lackaufbau, enthaltend mindestens die Zusammensetzung nach einem der Ansprüche 1 bis 11.

14. Ein Gegenstand, insbesondere ein Automobil, enthaltend ein Substrat beschichtet mit einer Zusammensetzung nach einem der Ansprüche 1 bis 11.

## Claims

1. Composition for coating substrates, in particular for coating thermoplastic substrates, containing at least one aqueous optionally hydroxy-functional, anionic or nonionic polyurethane dispersion (PUD) and at least one anionic styrene-polybutadiene copolymer dispersion (SBR),
**characterized in that**
the composition comprises the at least one polyurethane dispersion in a range from 33% to 90% by weight, based on the nonvolatile proportion of the composition, determined after evaporation of the solvents or dispersants and treatment of 1 g of the composition for 1 h at 125°C in accordance with DIN EN ISO 32511.

2. Composition according to Claim 1, wherein the weight ratio of the at least one polyurethane dispersion to the anionic styrene-polybutadiene copolymer dispersion is in a range from 10:1 to 1:3, preferably in a range from 9:1 to 1:2, based on the nonvolatile proportion of the composition.

3. Composition according to Claim 1 or 2, wherein the composition comprises the at least one anionic styrene-polybutadiene copolymer dispersion in a range from 9% to 67% by weight, based on the nonvolatile proportion of the composition.

4. Composition according to any of the preceding claims, wherein the composition comprises at least one reactive crosslinker component, in particular a polyisocyanate, preferably in a range from 0.01% to 5% by weight, based on the nonvolatile proportion of the composition.

5. Composition according to the preceding claim, wherein the crosslinker component comprises a polyisocyanate having a functionality in a range from 1.5 to 6, preferably in a range from 1.8 to 4, particularly preferably in a range from 2 to 3.5, wherein the crosslinker component preferably comprises the polyisocyanate in a range from 30% to 100% by weight, based on the total mass of the crosslinker component.

6. Composition according to any of the preceding claims, wherein the polyurethane dispersion comprises a polyurethane obtainable from the reaction of at least the components:
(A) at least one diol and/or polyol component;
(B) at least one polyisocyanate component;
(C) at least one hydrophilizing component having at least one hydrophilizing group;
(D) optionally mono-, di- and/or triamino-functional and/or hydroxyamino-functional compounds;
(E) optionally at least one other isocyanate-reactive compound.

7. Composition according to Claim 6, wherein the polyol component (A) has a number-average molecular weight Mn in a range from 62 to 18 000 g/mol, particularly preferably from 62 to 4000 g/mol, in particular selected from the group consisting of a polyether polyol, a polyester polyol, a polycarbonate polyol, a polylactone polyol and a polyamide polyol or mixtures of at least two thereof, in particular a polyester polyol or a polycarbonate polyol.

8. Composition according to Claim 6 or 7, wherein the at least one polyisocyanate component (B) is selected from the group consisting of tetramethylene diisocyanate, pentamethylene diisocyanate, hexamethylene diisocyanate, dodecamethylene diisocyanate, 1,4-diisocyanatocyclohexane, 1-isocyanato-3,3,5-trimethyl-5-isocyanatomethylcyclohexane (= IPDI, isophorone diisocyanate), 4,4'-diisocyanatodicyclohexylmethane, 4,4'-diisocyanato-2,2-dicyclohexylpropane, 1,4-diisocyanatobenzene, 2,4-diisocyanatotoluene, 2,6-diisocyanatotoluene, 4,4'-diisocyanatodiphenylmethane, 2,2'- and 2,4'-diisocyanatodiphenylmethane, tetramethylxylylene diisocyanate, p-xylylene diisocyanate, p-isopropylidene diisocyanate, and mixtures consisting of at least two of these compounds.

9. Composition according to any of Claims 6 to 8, wherein the hydrophilizing group of the hydrophilizing component (C) is selected from the group consisting of a sulfonate group, a carboxylate group or a combination of at least two thereof, in particular selected from the group consisting of sodium, lithium, potassium, tert-amine salts of N-(2-aminoethyl)-2-aminoethanesulfonic acid, of N-(3-aminopropyl)-2-aminoethanesulfonic acid, of N-(3-aminopropyl)-3-aminopropanesulfonic acid, of N-(2-aminoethyl)-3-aminopropanesulfonic acid, of the analogous carboxylic acids, of dimethylolpropionic acid, of dimethylolbutyric acid, of the Michael addition reaction products of 1 mol of diamine such as ethane-1,2-diamine or isophoronediamine and 2 mol of acrylic acid or maleic acid, and mixtures of at least two thereof.

10. Composition according to any of Claims 6 to 9, wherein the mono-, di- and/or triamino-functional and/or hydroxyamino-functional compounds (D) are selected from the group consisting of aliphatic and/or alicyclic primary and/or secondary monoamines such as ethylamine, diethylamine, the isomeric propylamines and butylamines, higher linear aliphatic monoamines and cycloaliphatic monoamines such as cyclohexylamine or mixtures of at least two thereof, in particular ethane-1,2-diamine, 1-amino-3,3,5-trimethyl-5-aminomethylcyclohexane, diethylenetriamine, diethanolamine, ethanolamine, N-(2-hydroxyethyl)ethylenediamine and N,N-bis(2-hydroxyethyl)ethylenediamine or mixtures of at least two thereof.

11. Composition according to any of Claims 6 to 10, wherein the composition contains at least one electrically conductive pigment, preferably in a range from 0.01% to 10% by weight, preferably 0.1% to 8% by weight, particularly preferably 0.5% to 7% by weight, very particularly preferably 0.5% to 6% by weight and especially preferably 0.5% to 5% by weight, in each case based on the total amount of the composition.

12. Use of a composition containing an aqueous polyurethane dispersion (PUD) and an anionic styrene-polybutadiene copolymer dispersion (SBR), in particular the composition according to any of Claims 1 to 11, for coating substrates, in particular thermoplastic substrates, **characterized in that** the composition comprises the at least one polyurethane dispersion in a range from 33% to 90% by weight, based on the nonvolatile proportion of the composition, determined after evaporation of the solvents or dispersants and treatment of 1 g of the composition for 1 h at 125°C in accordance with DIN EN ISO 32511.

13. Multilayer structure, in particular a multilayer surface coating structure, containing at least the composition according to any of Claims 1 to 11.

14. Object, in particular an automobile, containing a substrate coated with a composition according to any of Claims 1 to 11.

## Revendications

1. Composition destinée au revêtement de subjectiles, en particulier au revêtement de subjectiles thermoplastiques, contenant au moins une dispersion aqueuse de polyuréthane (PUD) anionique ou non ionique, éventuellement à fonction hydroxy, et au moins une dispersion anionique de styrène-polybutadiène (SBR),
**caractérisé en ce que**
la composition comporte ladite au moins une dispersion de polyuréthane dans une plage de 33 à 90 % en poids, par rapport à la fraction non volatile de la composition, déterminé après évaporation des solvants ou dispersants et traitement de la composition de 1 g pendant 1 h à 125 °C selon DIN EN ISO 32511.

2. Composition selon la revendication 1, dans laquelle le rapport en poids de ladite au moins une dispersion de polyuréthane à la dispersion anionique de copolymère styrène-polybutadiène se situe dans une plage de 10:1 à 1:3, de préférence dans une plage de 9:1 à 1:2, par rapport à la fraction non volatile de la composition.

3. Composition selon la revendication 1 ou 2, dans laquelle la composition comporte ladite au moibns une dispersion de copolymère styrène-polybutadiène dans une plage de 9 à 67 % en poids, par rapport à la fraction non volatile de la composition.

4. Composition selon l'une quelconque des revendications précédentes, dans laquelle la composition comporte au moins un composant réticulant réactif, en particulier un polyisocyanate, de préférence dans une plage de 0,01 à 5 % en poids, par rapport à la fraction non volatile de la composition.

5. Composition selon la revendication précédente, dans laquelle le composant réticulant comporte un polyisocyanate ayant une fonctionnalité dans une plage de 1,5 à 6, de préférence dans une plage de 1,8 à 4, de façon particulièrement préférée dans une plage de 2 à 3,5, le composant réticulant comportant le polyisocyanate de préférence dans une plage de 30 à 100 % en poids, par rapport à la masse totale du composant réticulant.

6. Composition selon l'une quelconque des revendications précédentes, dans laquelle la dispersion de polyuréthane comporte un polyuréthane pouvant être obtenu à partir de la réaction d'au moins les composants :
(A) au moins un composant diol et/ou un composant polyol ;
(B) au moins un composant polyisocyanate ;
(C) au moins un composant d'hydrophilisation, comportant au moins un groupe hydrophilisant ;
(D) éventuellement des composés mono-, di-, et/ou tri-aminofonctionnels et/ou hydroxyaminofonctionnels ;
(E) éventuellement au moins un autre composé réactif avec les isocyanates.

7. Composition selon la revendication 6, dans laquelle le composant polyol (A) présente une masse moléculaire moyenne en nombre Mn dans une plage de 62 à 18 000 g/mole, de façon particulièrement préférée von 62 à 4 000 g/mole, en particulier choisi dans le groupe constitué par un polyétherpolyol, un polyesterpolyol, un polycarbonatepolyol, un polylactonepolyol et un polyamidepolyol ou les mélanges d'au moins deux de ceux-ci, en particulier un polyesterpolyol ou un polycarbonatepolyol.

8. Composition selon la revendication 6 ou 7, dans laquelle ledit au moins un composant polyisocyanate (B) est choisi dans le groupe constitué par le diisocyante de tétraméthylène, le diisocyante de pentaméthylène, le diisocyanate d'hexaméthylène, le diisocyanate de dodécaméthylène, le 1,4-diisocyanato-cyclohexane, le 1-isocyanato-3,3,5-triméthyl-5-isocyanatométhyl-cyclohexane (= IPDI, diisocyanate d'isophorone), le 4,4'-diisocyanato-dicyclohexyl-méthane, le 4,4'-diisocyanato-dicyclohexylpropane-(2,2), le 1,4-di-isocyanatobenzène, le 2,4-diisocyanatotoluène, le 2,6-diisocyanatotoluène, le 4,4'-diisocyanatodiphénylméthane, le 2,2'- et le 2,4'-diisocyanatodiphénylméthane, le diisocyanate de tétraméthylxylylène,le p-xylylène-diisocyanate, le p-isopropylidène-diisocyanate ainsi que les mélanges constitués d'au moins deux de ces composés.

9. Composition selon l'une quelconque des revendications 6 à 8, dans laquelle le groupe hydrophilisant du composant d'hydrophilisation(C) est choisi dans le groupe constitué par un groupe sulfonate, un groupe carboxylate ou une association d'au moins deux de ceux-ci, en particulier choisi dans le groupe constitué par les sels de sodium, lithium-, potassium d'amines tertiaires de l'acide N-(2-aminoéthyl)-2-aminoéthanesulfonique, de l'acide N-(3-aminopropyl)-2-aminoéthanesulfonique, de l'acide N-(3-aminoproyl)-3-aminopropanesulfonique, de l'acide der N-(2-aminoéthyl)-3-aminopropanesulfonique, des acides carboxyliques analogues, de l'acide diméthylolpropionique, de l'acide diméthylolbutyrique, des produits de réaction dans le sens d'une addition de Michael de 1 mole de diamine comme par exemple la 1,2-éthanediamine ou l'isophoronediamine avec 2 moles d'acide acrylique ou d'acide maléique ainsi que les mélanges d'au moins deux de ceux-ci.

10. Composition selon l'une quelconque des revendications 6 à 9, dans laquelle les composés mono-, di-, et/ou tri-aminofonctionnels et/ou hydroxyaminofonctionnels (D) sont choisis dans le groupe constitué par les amines aliphatiques et/ou alicycliques primaires et/ou secondaires telles que l'éthylamine, la diéthylamine, les propyl- et butylamines isomères, les monoamines aliphatiques linéaires supérieures et les monoamines cycloaliphatiques telles que la cyclohexylamine ou les mélanges d'au moins deux de celles-ci, en particulier la 1,2-éthanediamine, le 1-amino-3,3,5-triméthyl-5-amino-méthyl-cyclohexane, la diéthylènetriamine, la diéthanolamine, l'éthanolamine, la N-(2-hydroxyéthyl)-éthylènediamine et la N,N-bis(2-hydroxyéthyl)-éthylènediamine ou des mélanges d'au moins deux de telles amines.

11. Composition selon l'une quelconque des revendications 6 à 10, das laquelle la composition contient au moins un pigment électroconducteur, de préférence dans une plage de 0,01 à 10 % en poids, de préférence 0,1 à 8 % en poids, de façon particulièrement préférée 0,5 à 7 % en poids, de façon tout particulièrement préférée 0,5 à 6 % en poids et de façon spécialement préférée 0,5 à 5 % en poids, chaque fois par rapport à la quantité totale de la composition.

12. Utilisation d'une composition contenant une dispersion aqueuse de polyuréthane (PUD) et une dispersion anionique de copolymère styrène-polybutadiène (SBR), en particulier de la composition selon l'une quelconque des revendications 1 à 11, pour le revêtement de subjectiles, en particulier subjectiles thermoplastiques, **caractérisée en ce que** la composition comporte ladite au moins une dispersion de polyuréthane dans une plage de 33 à 90 % en poids, par rapport à la fraction non volatile de la composition, déterminé après évaporation des solvants ou dispersants et traitement de la composition de 1 g pendant 1 h à 125 °C selon DIN EN ISO 32511.

13. Structure multicouche, en particulier structure de peinture multicouche, contenant au moins la composition selon l'une quelconque des revendications 1 à 11.

14. Article, en particulier automobile, comportant un subjectile revêtu avec une composition selon l'une quelconque des revendications 1 à 11.
